# EUROPEAN PATENT SPECIFICATION

(11) **EP 4 491 363 B1**
(45) Date of publication and mention of the grant of the patent: **18.02.2026**
(21) Application number: 24187749.7
(22) Date of filing: 10.07.2024
(51) Int. Cl.: B29B 15/12

(54) **AUTOMATED IMPREGNATION SYSTEM OF FIBROUS MATERIAL IN TOW FORMAT**
AUTOMATISCHES IMPRÄGNIERSYSTEM FÜR FASERMATERIAL IM TOW-FORMAT
SYSTÈME D'IMPRÉGNATION AUTOMATISÉ DE MATÉRIAU FIBREUX DANS UN FORMAT DE CÂBLE

(30) Priority: 13.07.2023 IT 202300014718
(43) Date of publication of application: 15.01.2025
(73) Proprietor: Comec - Costruzioni Meccaniche Innovative S.r.l., 66100 Chieti (IT)
(72) Inventor: TREVISAN, Giulio, 65121 Pescara (IT)
(74) Representative: Cutropia, Gianluigi

(56) References cited:
- WO-A2-2021/030541
- US-A- 3 905 327
- US-A1- 2012 251 823
- US-B1- 6 245 383

## Description

The present invention relates to an automated impregnation system of fibrous material in tow format.

Composite materials are composed of two or more phases which are separated by a well-defined interface and have better characteristics that those of the single materials, especially with reference to mechanical properties.

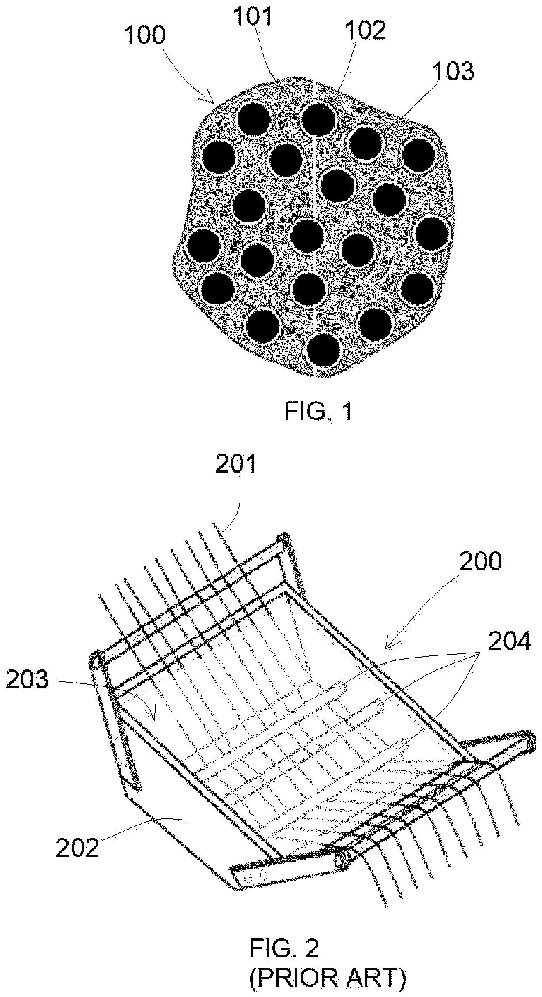

Referring to Fig. 1, a composite material (100) generally comprises a first continuous phase comprising a matrix (101), a second discontinuous phase comprising a reinforcing agent (102) and an interphase (103).

The matrix (101) is the continuous phase that encapsulates the reinforcing agent (102), protecting it mainly from degradation and wear phenomena, and allows for uniform stress transmission. In addition, the matrix (101) determines the final shape of the part, as well as the temperature at which the composite is used and how it is processed.

The purpose of the reinforcing agent (102) is to absorb the stresses applied to the part, preventing the formation and propagation of cracks in the matrix (101).

In spite of representing a very small fraction of the composite, the interphase (103) plays a very important role in terms of the final properties of the product. In fact, in order to provide an effective reinforcement, a good adhesion between the reinforcing agent (101) and the matrix (102) is necessary to prevent the reinforcement and the matrix from being detached, with the consequent composite failure.

The properties of the composite depend on the nature and characteristics of the individual constituents, on its geometry and on the phase distribution.

The demand for products made of fiber-reinforced polymer composites (FRPCs) is constantly growing. FRPCs are characterized by high rigidity, high tensile strength and long service life.

The manufacturing processes of FRPCs employ tows (rovings) of continuous fibers that are impregnated with thermosetting resin. Such processes are easily automated and provide FRPCs with maximum unidirectional tensile strength. However, a critical disadvantage of continuous fiber-reinforced polymers is represented by the relatively high production costs that are mainly affected by the following three factors:
- material costs, especially when carbon fibers are used,
- production costs of semi-finished products, such as fabrics or pre-impregnated fabrics, and
- costs for the waste created during the process.

Tows can be impregnated with a matrix in a preliminary process, thus obtaining a semi-finished product called pre-preg (pre-impreg/towpreg). Alternatively, tows can be impregnated directly during the part production process.

Pre-pregs are fiber bundles that are impregnated with a thermoplastic material or with a partially polymerized thermosetting resin. Pre-pregs are molded into the shape of the final product and are then placed in an oven or autoclave where polymerization takes place.

A chemical polymerization reaction occurs between the resin and a curing agent when thermosetting resins are used. Polymerization is accelerated when the process temperatures increase. Therefore, pre-pregs must be stored in a refrigerated warehouse because polymerization would occur at room temperature.

Impregnation systems can be divided into thermosetting and thermoplastic impregnation systems.

In thermoplastic impregnation systems, a thermoplastic material is melted and then pushed into a moving roving; once the thermoplastic matrix has cooled, it resolidifies without requiring an additional polymerization phase.

Thermosetting impregnation systems generally have better mechanical properties and a higher chemical resistance than thermoplastic impregnation systems.

Thermoplastics can be re-molded and welded under the influence of heat, while thermosetting products cannot. However, due to the high melting temperatures and to the high viscosity of the melted material in the thermoplastic impregnation, fiber wetting is far more difficult and complicated than in thermosetting processes. The temperature increase of the melted material additionally increases the risk of thermal degradation in thermoplastic products.

Tow impregnation systems can be classified into resin bath impregnation systems and closed impregnation systems.

There are two categories of resin bath impregnation systems: an immersion system and a drum system.

Fig. 2 illustrates an immersion system (200), wherein tows (201) are extracted from racks for tow reels and are drawn through a container (202) filled with resin (203). Each tow (201) moves in the container (202) through a complex arrangement of pins and rollers (204), resulting in high friction and tension. The tows (201) are impregnated with resin (203) by means of consolidation.

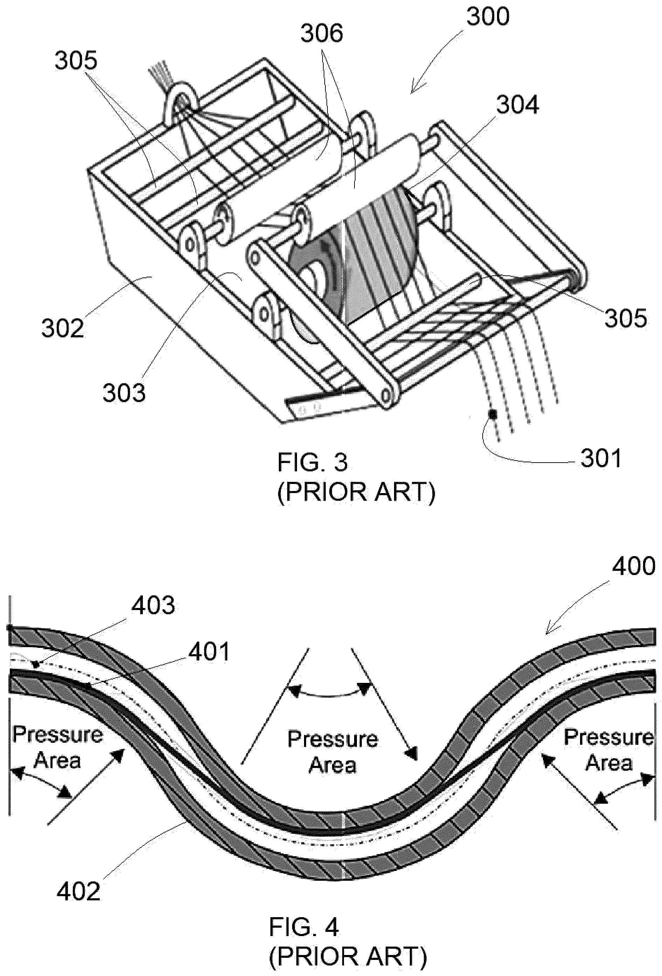

Fig. 3 illustrates a drum system (300) comprising a drum (304) arranged in a container (302) with resin (303). The drum (304) rotates about its axis and comes into contact with the resin (303), forming a thin resin film on its surface. The tow (301) is guided on the drum (304) and absorbs the resin by means of hydrostatic and capillary principles. Pins (305) and rollers (306) are mounted above the level of the resin (303) to help consolidate the resin and eject the air trapped in the resin.

The advantage of resin bath impregnation systems (200, 300) lies in their simplicity and availability. However, these systems are impaired by significant disadvantages. In fact, resin bath impregnation systems waste a large amount of resin, increasing the material costs. In addition, such resin bath impregnation systems allow a poor control over the volumetric ratio of the fibers; in fact, the fibers usually absorb more resin than necessary. The temperature and humidity change the viscosity of the resin over time, ultimately preventing the resin from being used.

In addition, open systems have dead zones where no circulation of resin occurs, causing different viscosities in the same container; this can also lead to premature solidification of the resin in the dead zones. A large amount of time and high operational expenses are required to clean and change the resin in the containers. Moreover, resin materials are mainly composed of a mixture of organic compounds, some of which are volatile organic compounds, which are often subject to strict legal specifications because of their potential environmental risks. Compliance with the regulations is an added expense.

Closed and semi-closed impregnation systems have been developed to overcome some drawbacks of the open bath impregnation systems. They can be classified into high-pressure impregnation systems and low-pressure impregnation systems.

In low-pressure impregnation systems, resin is sprayed or injected with a low-pressure method. The tow is drawn over a series of convex surfaces, including pins and rollers, using hydrostatic and capillary pressure to impregnate the tow with the resin. Low-pressure impregnation systems have a lower fiber compaction; this means that different volumes of fibers and more sensitive tows can be used. One disadvantage in these types of processes is that the resin with higher viscosity is not adequate, as the hydrostatic pressure and the capillary pressure are not sufficient to ensure a high impregnation quality.

Fig. 4 illustrates a siphon impregnation system (400), wherein the tow (401) is drawn through a sinusoidal-shaped polytetrafluoroethylene (PTFE) tube (402). The tow (401) is injected with resin (403) into an inlet of the tube (402) and is moved over curved sections of the tube, where hydrostatic and capillary pressures are applied on both sides of the tow (401). The rovings with different numbers of filaments can be moved through the siphon impregnation systems (400) at a high rate with a constant fiber volume ratio.

In high-pressure impregnation systems, the tow is passed through a slightly tapered injection chamber and is injected with resin at high pressure, directly impregnating the tow with the resin. In pultrusion processes, the injection chambers can be combined with consolidation matrices, heating matrices and heaters, integrating all their functions into a single pultrusion unit.

As the tow fibers are saturated with resin, they are pushed away from the walls of the injection chamber and are compacted. The fibers are compressed, making the resin injection more difficult; for this reason, high injection pressures are needed to compress the resin between the compacted filaments. The trapped air is ejected as the cross-sectional area of the cavity is reduced.

High-viscosity resins can be used with these types of systems. High-pressure impregnation systems are compact with no moving parts, which makes their design simple. One disadvantage is represented by the fact that the resin backflow cannot be effectively controlled and may cause a drop in the injection pressure. Therefore, injection pressure intervals of 2-15 bar are experienced during the process. The resin backflow flows toward the inlet of the device, as it is wider and easier to flow through. Another limiting factor of the high-pressure impregnation systems is that they are more difficult to control, especially for tows with higher thickness. In addition, the cavity is adjusted in such a way to fit only a given tow volume and the narrow cavity through which the tow passes may damage the towpreg.

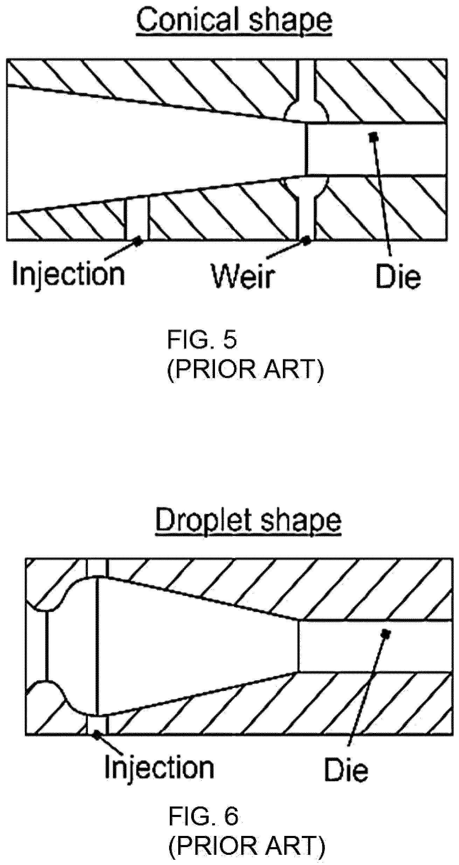

Injection chambers of different shapes are known for the high-pressure systems. Fig. 5 depicts an injection chamber with a conical shape. Fig. 6 shows an injection chamber with a droplet shape.

The aforesaid impregnation systems are used depending on the viscosity of the resin and on the thickness of the tow. Bath impregnation systems or low-pressure impregnation systems are preferred in the case of resins with a low viscosity and a low thickness of the tows, whereas high-pressure impregnation systems are preferable in the case of resins with a high viscosity and a high thickness of the tow.

In any case, all of the impregnation systems described so far involve a large consumption of resin. In fact, the resin cannot be recovered after being used and the amounts of resin that are not included in the fiber for the creation of the composite material are considered as waste.

The greatest difficulty for these types of manufacturing processes of composite parts involving a constant impregnation over the line is that the amount of resin cannot be controlled directly. These processes are characterized by three major inefficiencies:
1. Economic inefficiency: the resin waste involves an economic loss and a large environmental impact; moreover, its storage has a very high cost;
2. Process inefficiency: the foregoing processes involve some variables that cannot be controlled dynamically; the resin fed into the fiber and the process speed are very difficult to control and the process standardization involves a high time;
3. Time inefficiency: the aforementioned methodologies involve very low speeds, high man-hours, and therefore a high energy expense with high related costs.

WO2021030541A2 describes a machine used for making a pre-impregnated material or Towpreg. The machine includes reels whereon fiber sheets are placed, a resin impregnation system in which the fiber sheets are impregnated with resin, and a dosing unit comprising metering rollers that control the volume of resin used to coat the fibers.

US6245383B1 describes an apparatus for the production of pre-impregnated composite materials. The apparatus comprises an unwinding roller, an impregnation roller system, and a resin supply unit that feeds resin to the impregnation roller system.

US2012251823A1 describes a system for the production of pre-impregnated composite sheets. The system comprises an unwinding roller whereon a fiber sheet is wound, and two heating rollers on which a thermosetting resin well is formed. The fiber sheet passes between the heating rollers so that the fiber sheet is impregnated with the thermosetting resin.

US3905327A describes a system for impregnating and coating a textile yarn with resin. The system has an impregnation chamber into which the textile yarn is passed, a pump that draws the resin from a tank into the impregnation chamber, a recovery chamber that receives the excess resin from the impregnation chamber, and a recirculation pipe that hydraulically connects the recovery chamber with the tank.

The purpose of the present invention is to eliminate the drawbacks of the prior art by providing an impregnation system of fibrous material in tow format that is efficient and avoids production waste.

Another purpose is to provide such a tow impregnation system that is automated, standardizable and capable of controlling parameters, such as the amount of resin impregnated in the fiber and the process speed.

Still another purpose is to provide such a tow impregnation system that is capable of guaranteeing a high production speed.

These purposes are achieved in accordance with the invention with the features of the appended independent claims.

Advantageous achievements of the invention appear from the dependent claims.

The tow impregnation system according to the invention implements a technology capable of performing the impregnation of any type of fiber and providing reels of fibrous material impregnated with thermosetting and thermoplastic resin. Such a system is very versatile in that it allows for using different types of fibers with thermosetting or thermoplastic material.

In addition, the tow impregnation system according to the invention allows for controlling the process variables. Such a type of control of the process variables allows modularity because it allows for using multiple systems arranged in series.

Further features of the invention will become clearer from the following detailed description, which refers to a purely illustrative and therefore non-limiting embodiment, illustrated in the accompanying drawings, wherein:
Fig. 1 is a diagrammatic cross-sectional view of a composite material;
Fig. 2 is a perspective view illustrating an immersion impregnation system;
Fig. 3 is a perspective view illustrating a drum impregnation system;
Fig. 4 is a sectional view illustrating a siphon impregnation system;
Fig. 5 is a sectional view illustrating an injection chamber with conical shape for a high-pressure impregnation system;
Fig. 6 shows an injection chamber with droplet shape for a high-pressure impregnation system;
Fig. 7 is a side view of an impregnation system according to the invention;
Fig. 7A is an enlarged detail of Fig. 7 illustrating the impregnating unit of the impregnation system according to the invention;
Fig. 7B is an axonometric view illustrating a spreading system of the impregnating unit according to Fig. 7A; and
Fig. 7C is an axonometric view of the spreading system of Fig. 7B applied to an impregnation roller;
Fig. 7D is a diagrammatic front view illustrating a support system that supports the spreading system of Fig. 7;
Fig. 8 is a perspective view of the impregnation system of Fig. 7;
Fig. 9 is a perspective view of the impregnation system according to the invention, taken from a different angle with respect to Fig. 8;
Fig. 10 is a block diagram illustrating the resin recovery system of the impregnation system according to the invention; and
Fig. 11 is a block diagram illustrating the connections to the PLC of the impregnation system according to the invention.

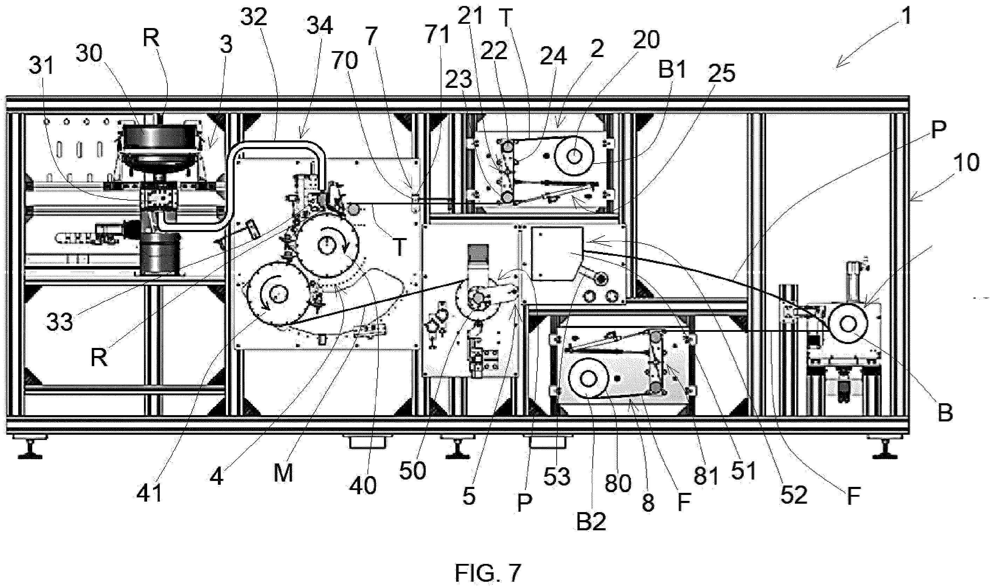

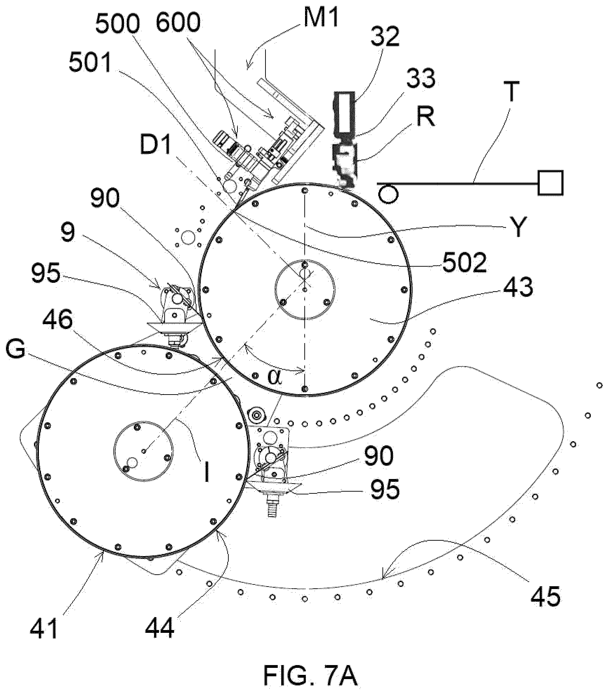

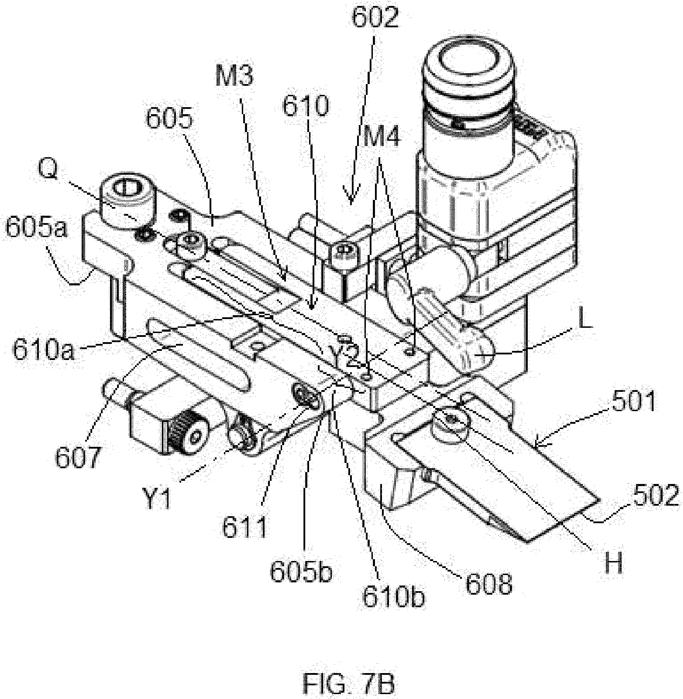

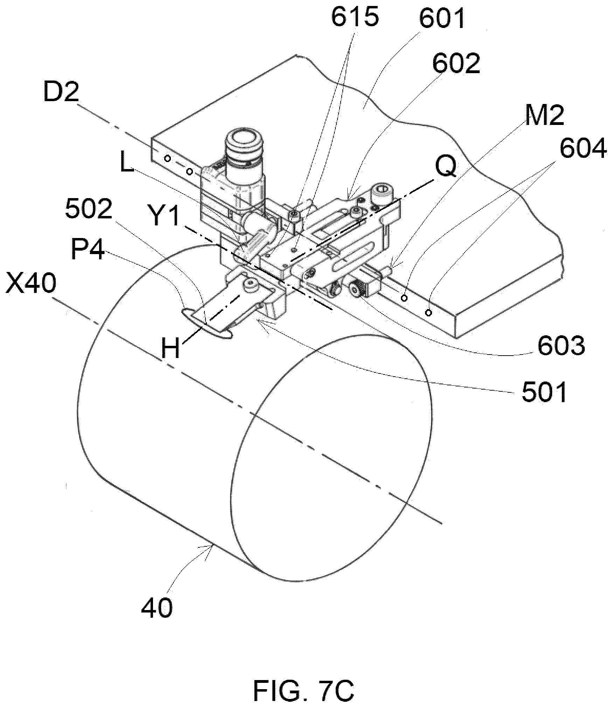

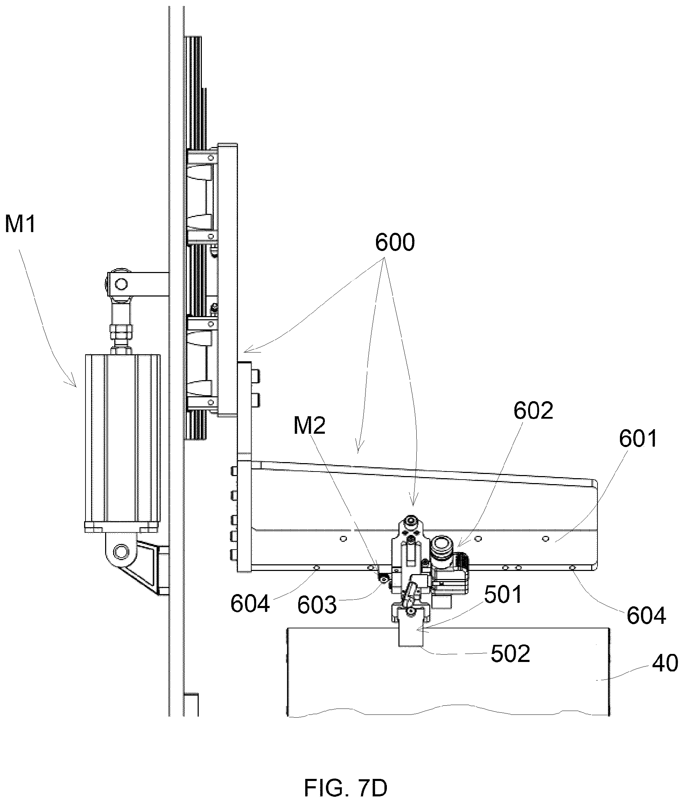

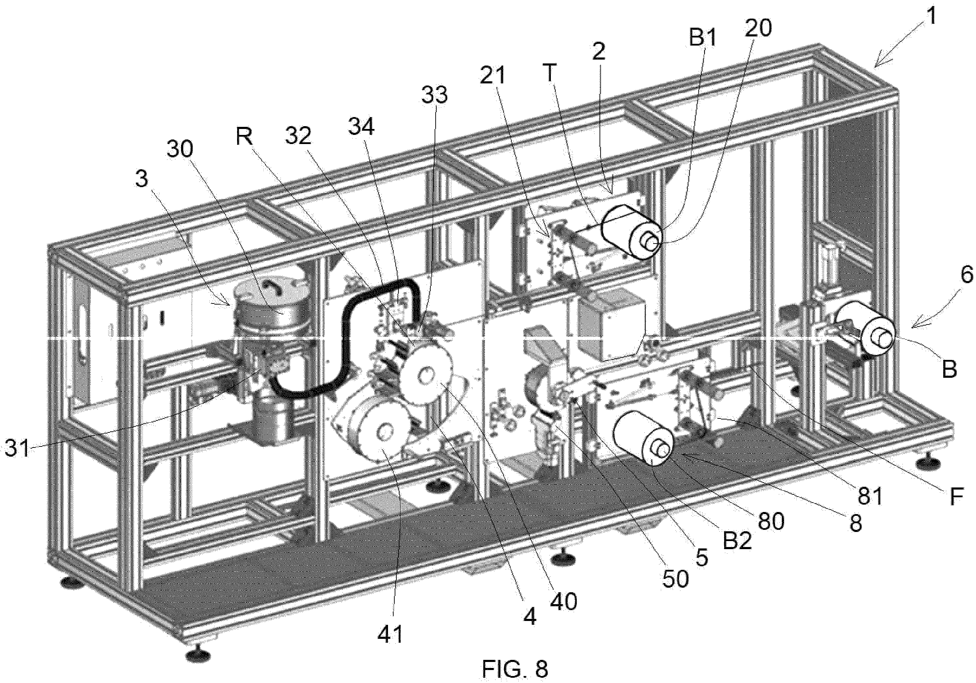

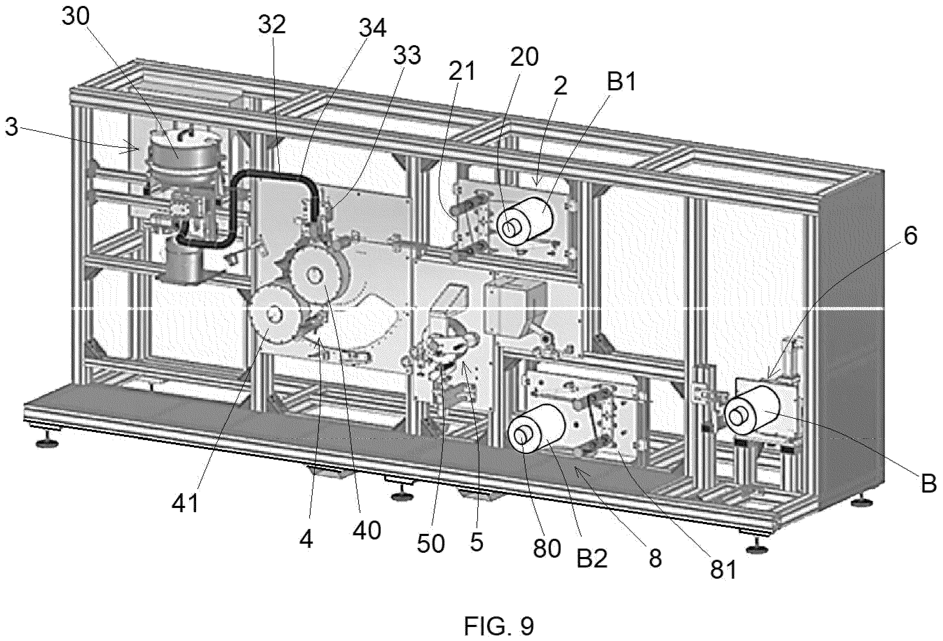

With reference to Figs. 7- 11, the impregnation system of fibrous material in tow format according to the invention, which is generally denoted by reference numeral 1, is described.

The impregnation system (1) comprises:
- an unwinding unit (2),
- a resin supply unit (3),
- an impregnating unit (4),
- a resin recovery system (9),
- a balancing unit (5), and
- a winding unit (6).

Optionally, the impregnation system (1) may include a UV unit (7) and a second unwinding unit (8) for a releasable film.

All of the aforementioned units are mounted in a frame (10) having a substantially parallelepiped structure.

The unwinding unit (2) is mounted in a central upper position of the frame (10) and has the function of unwinding a tow (T) of fibrous material from a tow reel (B1). The tow (T) can be of long-fiber or short-fiber type.

The unwinding unit (2) comprises an unwinding roller (20) whereon the tow reel (B1) is placed and a dancer unit (21) that adjusts the tension of the tow (T) unwound from the reel (B1).

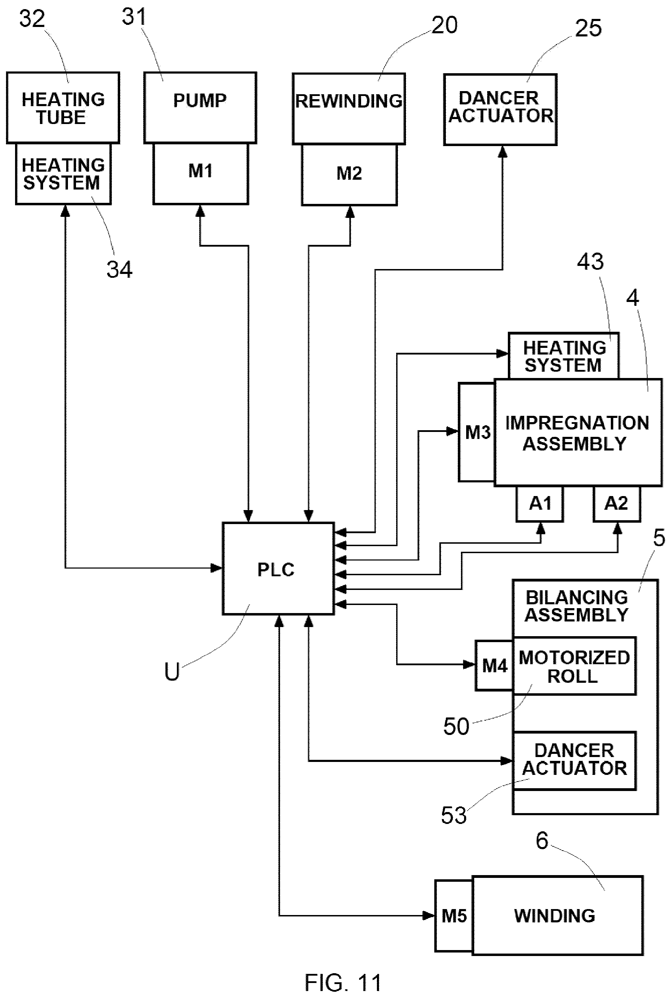

The unwinding roller (20) is motorized by means of an electric motor (M2) (Fig. 11).

The dancer unit (21) comprises at least one dancer roller (22, 23) mounted on an oscillating arm (24) pivoted to the frame (10). An actuator (25) moves the oscillating arm (24) to adjust the tension of the tow (T). The actuator (25) can be a linear actuator comprising a cylinder-piston assembly.

Advantageously, the dancer unit (21) comprises two dancer rollers (22, 23) mounted on the oscillating arm (24). In this way, the tow (T) unwound from the reel (B1) is returned by the dancer rollers (22, 23).

The tow (T) coming out of the dancer unit (21) passes through the UV unit (7). The UV unit (7) comprises a chamber (70) wherein a UV lamp (71) is arranged. The UV lamp (71) emits a UV radiation that invests the tow (T), making the fibers softer in order to widen the gaps between the fibers that are created in the unwinding unit (2).

The resin supply unit (3) is mounted in the frame (10) in left upper position, with reference to the Figures.

The resin supply unit (3) comprises a tank (30), a metering pump (31), a heating pipe (32) and a nozzle (33).

The tank (30) is suitable for containing a resin (R) for the production of composite material. The resin (R) can be of thermoplastic or thermosetting type.

The metering pump (31) comprises an electric motor (M1) (Fig. 11). The metering pump (31) is connected to the tank (30) and to the heating pipe (32) and is used to pump the resin (R) from the tank (30) into the heating pipe (32).

The heating pipe (32) has a heating system (34) suitable for heating the pipe to a suitable temperature according to the type of resin to be processed.

The heating system (34) may comprise electrical heating elements integrated into the heating pipe or a hot heat transfer fluid flowing in pipes integrated into the heating pipe (32).

The impregnating unit (4) comprises a first impregnating roller (40) and a second impregnating roller (41).

At least one of the impregnating rollers (40, 41) is a roller that is motorized by an electric motor (M3) (Fig. 11). In such a way, the rotation speed of the impregnating rollers (40, 41) can be controlled in order to control the passage time of the tow (T).

Referring to Fig. 7A, the impregnating unit (4) also comprises a spreading system (500) that is responsible for spreading the resin on the impregnating rollers (40, 41). The spreading system (500) may comprise doctor blades that come into contact the impregnating rollers.

The nozzle (33) injects resin (R) onto the first impregnating roller (4). The spreading system (500) spreads the resin (R) onto the impregnating rollers, and the dancer unit (21) adjust the tension of the tow (T) so that the tow (T) is pressed on the impregnating rollers (40, 41) to impregnate with resin (R).

With reference to Figs. 7A, 7B, 7C, and 7D, the spreading system (500) comprises a doctor blade (501) having a longitudinal axis (H) and an operating edge (502) perpendicular to said longitudinal axis (H) of the doctor blade, which is suitable for grazing an outer surface of one of the two impregnating rollers (40), particularly of the first impregnating roller (40), in order to spread and distribute the resin on the outer surface of the impregnating roller (40) during the rotation of the impregnating roller.

The operating edge (502) is suitable for grazing the outer surface of the impregnating roller (40) in a given section (P4) of the impregnating roller. The longitudinal axis (H) of the doctor blade is parallel or slightly inclined with respect to a plane tangent to the section (P4) where the operating edge (502) grazes the impregnating roller (40).

The spreading system (500) comprises an adjusting unit (600) suitable for supporting the doctor blade (501) and adjusting a position of the doctor blade (501) relative to the impregnating roller (40) in order to set the orientation of the operating edge (502) of the doctor blade relative to the outer surface of the impregnating roller (40).

Such an adjusting unit (600) is configured in such a way to allow the doctor blade (501) to both translate and rotate.

The adjusting unit (600) comprises:
- first adjusting means (J1) (shown in Fig. 7D and Fig. A) suitable for moving the doctor blade (501) along a first direction (D1) substantially radial to the impregnating roller (40) so as to adjust the distance of the operating edge (502) of the doctor blade with respect to the outer surface of the impregnating roller (40);
- second adjusting means (J2) suitable for adjusting a position of the doctor blade along a second direction (D2) parallel to the axis (X40) of the impregnating roller (40), that is, along the length of the impregnating roller (40);
- third adjusting means (J3) suitable for rotating the doctor blade (501) with respect to a first axis (Y1) parallel to the second direction (D2) in such a way to incline the longitudinal axis (H) of the doctor blade with respect to the plane tangent to the surface of the impregnating roller (40), placing the longitudinal axis (H) of the doctor blade parallel to the plane tangent to the section (P4) or slightly inclined with respect to the plane tangent to the section (P4);
- fourth adjusting means (J4) suitable for rotating the doctor blade with respect to a second axis of rotation (Y2) perpendicular to both the first direction (D1) and the second direction (D2), in such a way that the longitudinal edge (502) of the doctor blade can be inclined or perfectly parallel with respect to the section (P4) of the surface of the impregnating roller (40).

The adjusting unit (600) comprises:
- a cross member (601) that extends substantially parallel to the axis of the roller (40);
- a support head (602) that is supported in projecting position from the cross member (601) and supports the doctor blade (501).

Referring to Figs. 7A and 7B, the first adjusting means (J1) comprise a pneumatic actuator that moves the cross member (601) in order to move the operating edge (502) of the doctor blade away from or closer to the outer surface of the impregnating roller (40).

On the other hand, the second adjusting means (J2) comprise fixing pins (603) that are alternately inserted into holes (604) drilled along the cross member (601). In such a way, by inserting the fixing pins (603) into certain holes relative to other holes in the cross member (601), the axial position of the doctor blade can be adjusted relative to the impregnating roller (40).

Referring to Figs. 7B and 7C, the support head (602) comprises a bracket (605) that extends along a longitudinal axis (Q) orthogonal to the cross member (601). The bracket (605) has a first end (605a) facing the cross member (601) and a second end (605b) opposite the first end (605a).

The bracket (605) comprises an inner cavity (not shown in the attached figures) that extends lengthwise along the longitudinal axis (Q) of the bracket. The inner cavity is accessible through a side slot (607) shown in Fig. 7B.

A doctor blade holder (608) is connected in projecting position on the second end (605b) of the bracket to support the doctor blade (501). Specifically, a pin with axis parallel to the longitudinal axis (Q) of the bracket protrudes from the second end (605b) of the bracket. The doctor blade holder (608) comprises a semi-cylindrical seat (not shown in the attached figures) suitable for resting on and mating with the pin.

The third adjusting means (J3), which are not shown in detail in the attached figures, comprise:
- a rocker arm (610) pivoted to the bracket (605) by means of a pivot (611) with axis transverse to the longitudinal axis (Q), which comprises a first arm (610a) placed above the inner cavity of the bracket and a second arm (610b) placed above the doctor blade holder (608); and
- a wedge placed in the inner cavity of the bracket (605) and suitable for interfering with the first arm (610a) of the rocker arm (610) in order to rotate the entire rocker arm (610) so that the second arm (610b) of the rocker arm (610) presses more or less intensely on the doctor blade holder (608) so as to generate a slight rotation of the doctor blade holder (608) and thus an adjustment of the inclination of the longitudinal axis (H) of the doctor blade (501) with respect to the plane tangent to the section (P4) of the outer surface of the impregnating roller (40).

A locking lever (L) is hinged to the support head (602) and is suitable for being positioned by a user to act as a position lock for the doctor blade holder (608).

In effect, once the inclination of the doctor blade has been adjusted by means of the third adjusting means (J3), it is necessary to move the lever (L) so as to dispose it in such a position to physically prevent the backward rotation of the doctor blade holder (608).

The fourth adjusting means (J4) comprise two nuts (not visible from the attached figures) arranged in through holes (615) machined in the rocker arm (610), each one having a tip suitable for interfering against the doctor blade holder (608). The through holes (615) provided with the two nuts are located on either side of the second axis of rotation (Y2) which is also parallel to the longitudinal axis (Q) of the bracket (605).

By screwing or unscrewing the nuts, the doctor blade holder (608) and consequently the doctor blade (501) will perform a micro-rotation along the second axis of rotation (Y2), causing an inclination of the operating edge (502) of the doctor blade (501) with respect to the section (P4) of the surface of the impregnating roller (40). Such an adjustment is made to disposed the operating edge (502) of the doctor blade (501) in a perfectly parallel position relative to the section (P4) of outer surface of the impregnating roller. The nuts (615) can be screwed or unscrewed by means of special tools, such as a screwdriver or an Allen wrench.

The impregnating rollers (40, 41) may have a heating system (43) in order to be heated according to the viscosity the resin (R) needs to reach to better impregnate the tow. The heating system (43) of the impregnating rollers may comprise electric heating elements or conduits with a circulation of a heat transfer fluid.

The impregnating rollers (40, 41) tend to exert a hydrostatic pressure on the dry tow (T) that allows for impregnating the tow fibers and covering the empty spaces created by the unwinding unit (2) and by the UV unit (7).

The impregnating rollers (40, 41) are arranged in such a way to provide a gap (G) between them that is equal to the thickness of the towpreg to be obtained. In this way, the tow (T) impregnated with resin (R) passes through the gap (G) between the two impregnating rollers (40, 41) in such a way to compact the resin with a constant thickness.

The impregnating unit (4) comprises a center distance adjustment system (46) to adjust the center distance between the impregnating rollers (40, 41) and thus adjust the width of the gap (G) between the impregnating rollers and the thickness of the towpreg. The center distance adjustment system (46) comprises a first actuator (A1) (Fig. 11) that is responsible for moving the first impregnating roller (40) or the second impregnating roller (41). Using the center distance adjustment system (46), the impregnating rollers (40, 41) can be spaced apart to achieve a desired resin thickness.

The impregnating unit (4) may comprise an angle adjustment system (44) suitable for moving the second impregnating roller (41) to adjust an angle (α) of the center distance (I) between the second impregnating roller (41) and the first impregnating roller (40), for example with respect to a vertical axis (Y). The angle adjustment system (44) comprises a guide (45) in the shape of an arc of a circle subtended by an angle of about 60°-120°, with center in the center of the first impregnating roller (40). In this way, the second impregnating roller (41) can move in the guide (45) by varying the angle (α).

By varying the angle of the center distance (I) between the two impregnating rollers, the contact surface between the tow (T) and the first impregnating roller (40) is varied. In view of the above, the contact surface between the tow and the first impregnating roller can vary according to an arc of a circle with angle at the center varying in the range from 30° to 150°. Obviously, for obtuse angles there are increased contact times between tow and first roller, whereas for acute angles there are reduced contact times.

In addition, by varying the angular position between the two impregnating rollers (40, 41), it is possible to act on the arc of circumference in contact between the tow and the impregnating rollers in order to control the resin content of the towpreg.

The impregnation system (1) also comprises the resin recovery system (9) to recover the excess resin dripping from the impregnating unit (4).

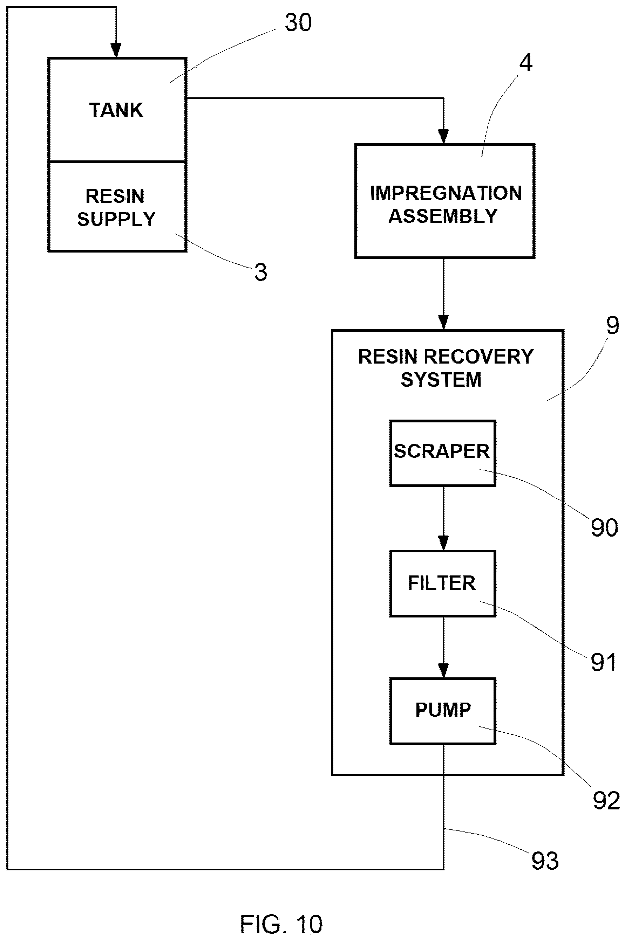

Referring to Figs. 7A and 10, the resin recovery system (9) comprises scrapers (90) that scrape the impregnating rollers (40, 41) to recover the excess resin. A cup (95) is associated with each scraper (90) and is arranged under the scraper (90) to receive the excess resin scraped by the scraper.

The recovered resin is filtered by a filter (91) and is circulated into a conduit (93) communicating with the tank (30) of the resin supply unit by means of a pump (92).

Returning to Fig. 7, the impregnated tow (M) coming out of the impregnating unit (4) is fed to the balancing unit (5). The balancing unit (5) includes a motor roller (50) whereon the impregnated tow (M) is wound. The motor roller (50) tends to help the progress of impregnation and to compact the tow fibers and the resin in such a way to obtain a homogeneous composite material, that is to say a towpreg (P).

The balancing unit (5) also includes a dancer (51) equipped with a sensor (52). The towpreg (P) passes through the dancer (51).

The dancer (51) comprises a pneumatic piston connected to a rod with the roller that tensions the tow. The function of the dancer (51) is to maintain the tension of the tow so that it is tensioned during the process. Because of the circuit, the tow may be defibred and therefore the dancer (51) keeps the tow in tension while maintaining a useful tension on the impregnated fiber.

The sensor (52) is arranged inside a casing of the dancer (51). The sensor (52) makes it possible to detect the tensioning of the tow and adjust the tension of the dancer (51) accordingly.

A reel (B2) of peer release film (F) is mounted in the second unwinding unit (8), which does not adhere to the towpreg (P) and thus allows to separate the various layers of towpreg in such a way that they can be detached easily during the unwinding operation to create composite parts.

The second unwinding unit (8) comprises a motorized unwinding roller (80), on which the reel (B2) of peer release film is placed, and a dancer unit (81) that adjusts the tension of the peer release film (F) unwound from the reel (B2).

The towpreg (P) coming out of the balancing unit (5) and the peer release film (F) coming out of the second unwinding unit (8) are fed to a winding unit (6) that is in charge of making a reel (B) of layers of towpreg (P) separated by the peer release film (F).

With reference to Fig. 11, it should be considered that:
- the metering pump (31) has a motor (M1),
- the unwinding roller (20) has a motor (M2),
- the impregnating rollers (40, 41) of the impregnating unit (4) have a motor (M3) for rotating,
- the motorized roller (50) of the balancing group has a motor (M4), and
- the winding unit (6) has a motor (M5).

All of the motors (M1, M2, M3, M4, M5) are connected to a programmable logic controller (U), commonly referred to as "PLC".

In addition, the impregnation system (1) comprises:
- the actuator (25) of the dancer unit of the unwinding unit,
- the first actuator (A1) for adjusting the center distance (I) between the first impregnating roller and the second impregnating roller,
- the second actuator (A2) for adjusting the angle of the center distance (I) between the first impregnating roller and the second impregnating roller,
- the actuator (53) of the dancer (51) of the balancing unit.

All of the actuators (25, A1, A2, 53) are connected to the PLC (U).

In addition, the impregnation system (1) comprises:
- the heating system (34) of the heating tube, and
- the heating system (43) of the impregnating rollers.

The two heating systems (34, 43) are connected to the PLC (U).

In this way, according to the type of resin (R) to be used, the PLC (U) can control the tension of the tow (T), the heating of the resin (R), the thickness of the towpreg (P) to be obtained, and the production speed.

The impregnation system (1) is suitable for producing reels (B) of pre-impregnated material with thermosetting or thermoplastic matrix, with short fiber or long fiber.

The impregnation system (1) provides a perfect control on the final material obtained thanks to the presence of the metering pump (31) and of the impregnating rollers (41). In fact, the feeding of the resin (R), the speed of rotation of the various rollers of the system and the arrangement of the impregnating rollers (40, 41) can be self-adjusted with the PLC (U) according to the degree of resin content to be obtained in the towpreg.

Such a system allows a high production efficiency for two reasons:
- it reduces the amount of resin used, which can be recovered by means of the resin recovery system (9), thus reducing the waste, and
- it speeds up the towpreg production up to 100 m/min of impregnated fiber thanks to the special resin supply system (3) that comprises the tank (30), the metering pump, the heating pipe (32) and the nozzle (33).

The impregnation system according to the invention makes it possible to vary:
- the tension of the towpreg to enlarge the empty spaces between the fibers
- the impregnation speed
- the introduction of resin on the impregnating rollers
- the resin content in the towpreg, and
- the temperatures in such a way to convey the resin according to the required viscosity.

The production speed can be varied according to the resin to be used. The variation of the production speed is done with the motors (M2, M3) of the unwinding unit (2) and of the impregnating unit (4), which are interconnected to the motor (M1) of the metering pump (31) through the PLC (U).

The impregnation system (1) is versatile and modular according to the required impregnation lines. Its modularity allows for creating multiple impregnation systems in a single machine easily, thus increasing the production with a reduction of residues and waste.

The impregnation system (1) allows multiple tows to be impregnated in series, creating multiple impregnation systems in line and in parallel. The machines of the prior art are not versatile because the bath impregnation does not provide for coupling multiple tanks, but only the passage of tows through the bath and successively one winding.

The modularity of the impregnation system (1) lies in the fact that each system can be repeated for "N" numbers of impregnation and winding units. As mentioned above, the bath does not allow for an adjustable impregnation and therefore, in spite of being modular, it does not provide for a specific control.

The introduction of the resin (R) on the tow (T) can be varied by means of the metering pump (31) and the nozzle (33) that places a desired amount of resin on the first impregnating roller (40) according to the process speed.

Moreover, a desired resin thickness can be created because of the arrangement of the first impregnating roller (40) and of the second impregnating roller (41) at a mutual distance according to the thickness of the towpreg to be obtained. In the machines of the prior art, the resin cannot be dosed as the fibers are "immersed" without being able to control the resin introduced into the fiber.

The impregnation system (1) allows for varying the tension of the tow (T) by means of the dancer unit (21) and the motor of the unwinding roller (20). In conventional machines, the tow is tensioned directly by the winding spindle without any control.

The impregnation system (1) allows for varying the temperature of the resin by means of the heating system (34) of the heating pipe and by means of the heating system (43) of the impregnating rollers (40, 41). In the machines of the prior art, the resin is introduced into the bath already heated without any temperature control.

The impregnation system (1) comprises the resin recovery system (9). In contrast, the machines of the prior art have no resin recovery system because the resin is contaminated with deteriorated fiber from the impregnated tow.

Although the description refers to the use of the impregnation system (1) to impregnate a single sheet that is wound on a reel, obviously the system can be used to simultaneously impregnate several sheets arranged side by side.

## Claims

1. Impregnation system (1) of fibrous material in tow format, comprising:
- an unwinding unit (2) to unwind a tow (T) from a reel (B1),
- a resin supply unit (3) to feed a resin (R) suitable for impregnating the tow (T),
- an impregnating unit (4) that is responsible for impregnating the tow (T) with the resin (R) so as to obtain an impregnated tow (M); wherein said impregnating unit (4) comprises a first impregnating roller (40) and a second impregnating roller (41) arranged so as to provide a gap (G) between them that is equal to the thickness of the towpreg to be obtained;
- a balancing unit (5) that is responsible for compacting the impregnated tow (M) to obtain a towpreg (P); and
- a winding unit (6) that winds said towpreg (P) so as to obtain a towpreg reel (B);
**characterized in that**:
said impregnation system (1) comprises a resin recovery system (9) to recover the excess resin from the impregnating unit (4) and send the recovered resin to the resin supply unit (3); wherein said resin recovery system (9) comprises scrapers (90) to scrape the impregnating rollers (40, 41) and recover the excess resin; and
said impregnating unit (4) comprises a spreading system (500) that is responsible for spreading the resin onto the impregnating rollers (40, 41).

2. The impregnation system (1) according to claim 1, wherein the spreading system (500) comprises a doctor blade (501) having a longitudinal axis (H) and an operating edge (502) perpendicular to said longitudinal axis (H) of the doctor blade (501), which is suitable for grazing an outer surface of one of the two impregnating rollers (40) to spread and distribute the resin on the outer surface of the impregnating roller (40) during the rotation of the impregnating roller (40).

3. The impregnation system (1) according to claim 1 or 2, wherein said operating edge (502) is suitable for grazing the outer surface of the impregnating roller (40) in a section (P4) of the outer surface of the impregnating roll; wherein the longitudinal axis (H) of the doctor blade is parallel to or slightly inclined with respect to a plane tangent to the section (P4) wherein the operating edge (502) of the doctor blade (501) grazes the impregnating roller (40).

4. The impregnation system (1) according to any one of the preceding claims, wherein the spreading system (500) comprises an adjusting unit (600) suitable for supporting the doctor blade (501) and adjust a position of the doctor blade (501) relative to the impregnating roller (40) in order to set the orientation of the operating edge (502) of the doctor blade relative to the outer surface of the impregnating roller (40).

5. The impregnation system (1) according to claim 4, wherein said adjusting unit (600) is configured so as to allow the doctor blade (501) to translate and rotate.

6. The impregnation system (1) according to claim 5, wherein said adjusting unit (600) comprises:
- first adjusting means (J1) suitable for moving the doctor blade (501) along a first direction (D1) substantially radial to the impregnating roller (40) so as to adjust the distance of the operating edge (502) of the doctor blade (501) with respect to the outer surface of the impregnating roller (40);
- second adjusting means (J2) suitable for adjusting a position of the doctor blade along a second direction (D2) parallel to the axis (X40) of the impregnating roller (40);
- third adjusting means (J3) suitable for rotating the doctor blade (501) with respect to a first axis of rotation (Y1) parallel to the second direction (D2) such to incline the longitudinal axis (H) of the doctor blade with respect to the plane tangent to the surface of the impregnating roller (40), disposing the longitudinal axis (H) of the doctor blade in parallel position to the plane tangent to the section (P4) or in a slightly inclined position with respect to the plane tangent to the section (P4);
- fourth adjusting means (J4) suitable for rotating the doctor blade with respect to a second axis of rotation (Y2) perpendicular to the first direction (D1) and to the second direction (D2), in such a way to incline or dispose the longitudinal edge (502) of the doctor blade in a perfectly parallel position with respect to the section (P4) of the surface of the impregnating roller (40).

7. The impregnation system (1) according to any one of the preceding claims, wherein said resin recovery system (9) comprises a cup (95) disposed below each scraper (90) for receiving the excess resin scraped by the scraper (90).

8. The impregnation system (1) according to any one of the preceding claims, wherein said resin recovery system (9) comprises:
- a filter (91) to filter the resin recovered by the scrapers (90), and
- a pump (92) to pump the recovered resin into a conduit (93) communicating with the tank (30) of the resin supply unit.

9. The impregnation system (1) according to any one of the preceding claims, further comprising a UV unit (7) arranged at the outlet of said unwinding unit (2) in order to emit a UV radiation on the tow (T) that is unwound by the unwinding unit.

10. The impregnation system (1) according to any one of the preceding claims, wherein the impregnating unit (4) further comprises a center distance adjustment system (46) for adjusting the center distance between the impregnating rollers (40, 41).

11. The impregnation system (1) according to any one of the preceding claims, wherein the impregnating unit (4) comprises an angle adjustment system (44) suitable for moving the second impregnating roller (41) to adjust an angle of the center distance (I) between the second impregnating roller (41) and the first impregnating roller (40).

12. The impregnation system (1) according to any one of the preceding claims, wherein said resin supply unit (3) comprises:
- a tank (30) containing the resin (R),
- a heating pipe (32) connected to the tank (30) and provided with a heating system (34) to heat the resin passing through the heating pipe,
- a metering pump (31) that pumps the resin from the tank (30) to the heating pipe (32), and
- a nozzle (33) that deposits the heated resin in said impregnating unit (4).

13. The impregnation system (1) according to any one of the preceding claims, wherein at least one of the impregnating rollers (40, 41) is a roller that is motorized by means of an electric motor (M3).

14. The impregnation system (1) according to any one of the preceding claims, wherein the impregnating rollers (40, 41) have a heating system (43) so as to be heated.

15. The impregnation system (1) according to any one of the preceding claims, wherein the balancing unit (5) comprises:
- a motor roller (50) whereon the impregnated tow (M) coming out of the impregnating unit (4) is wound so as to be compacted and to obtain a towpreg (P), and
- a dancer roller (51) equipped with a sensor (52) whereon the towpreg (P) coming out of the motor roller (50) is returned.

## Patentansprüche

1. Imprägnierungssystem (1) aus Fasermaterial in Kabelform, umfassend:
- eine Abwickeleinheit (2) zum Abwickeln eines Kabels (T) von einer Spule (B1),
- eine Harzzuführeinheit (3) zum Zuführen eines Harzes (R), das zum Imprägnieren des Kabels (T) bestimmt ist,
- eine Imprägniereinheit (4), die für das Imprägnieren des Kabels (T) mit dem Harz (R) zuständig ist, um ein imprägniertes Kabel (M) zu erhalten; wobei die Imprägniereinheit (4) eine erste Imprägnierwalze (40) und eine zweite Imprägnierwalze (41) umfasst, die so angeordnet sind, dass zwischen ihnen ein Spalt (G) bereitgestellt wird, der gleich der Dicke des zu erhaltenden vorimprägnierten Kabels ist;
- eine Ausgleichseinheit (5), die für das Verdichten des imprägnierten Kabels (M) zuständig ist, um ein vorimprägniertes Kabel (P) zu erhalten; und
- eine Aufwickeleinheit (6), die das vorimprägnierte Kabel (P) aufwickelt, um eine Spule (B) mit vorimprägniertem Kabel zu erhalten;
**dadurch gekennzeichnet, dass**:
das Imprägnierungssystem (1) ein Harzrückgewinnungssystem (9) zum Zurückgewinnen des überschüssigen Harzes aus der Imprägniereinheit (4) umfasst und dieses zur Harzzuführeinheit (3) leitet; wobei das Harzrückgewinnungssystem (9) Abstreifer (90) umfasst, um die Imprägnierwalzen (40, 41) abzustreifen und das überschüssige Harz zurückzugewinnen; und
die Imprägniereinheit (4) ein Aufbringsystem (500) umfasst, das für das Aufbringen des Harzes auf die Imprägnierwalzen (40, 41) zuständig ist.

2. Imprägnierungssystem (1) nach Anspruch 1, wobei das Aufbringsystem (500) eine Rakel (501) mit einer Längsachse (H) und einer Arbeitskante (502) umfasst, die senkrecht zur Längsachse (H) der Rakel (501) ist und dazu geeignet ist, eine Außenfläche einer der beiden Imprägnierwalzen (40) anzustreifen, um das Harz während der Drehung der Imprägnierwalze (40) auf die Außenfläche der Imprägnierwalze (40) aufzubringen und zu verteilen.

3. Imprägnierungssystem (1) nach Anspruch 1 oder 2, wobei die Arbeitskante (502) dazu geeignet ist, die Außenfläche der Imprägnierwalze (40) auf einem Abschnitt (P4) der Außenfläche der Imprägnierwalze anzustreifen; wobei die Längsachse (H) der Rakel parallel oder leicht geneigt in Bezug auf eine Ebene tangential zum Abschnitt (P4) ist, wobei die Arbeitskante (502) der Rakel (501) die Imprägnierwalze (40) anstreift.

4. Imprägnierungssystem (1) nach einem der vorstehenden Ansprüche, wobei das Aufbringsystem (500) eine Einstelleinheit (600) umfasst, die dazu geeignet ist, die Rakel (501) zu tragen und eine Stellung der Rakel (501) in Bezug auf die Imprägnierwalze (40) einzustellen, um die Ausrichtung der Arbeitskante (502) der Rakel in Bezug auf die Außenfläche der Imprägnierwalze (40) einzustellen.

5. Imprägnierungssystem (1) nach Anspruch 4, wobei die Einstelleinheit (600) so konfiguriert ist, dass der Rakel (501) sowohl eine Verschiebung als auch eine Drehung erlaubt ist.

6. Imprägnierungssystem (1) nach Anspruch 5, wobei die Einstelleinheit (600) umfasst:
- erste Einstellmittel (J1), die dazu geeignet sind, die Rakel (501) entlang einer ersten, im Wesentlichen radial zur Imprägnierwalze (40) verlaufenden Richtung (D1) zu bewegen, um den Abstand der Arbeitskante (502) der Rakel (501) in Bezug auf die Außenfläche der Imprägnierwalze (40) einzustellen;
- zweite Einstellmittel (J2), die dazu geeignet sind, eine Stellung der Rakel entlang einer zweiten Richtung (D2) einzustellen, die parallel zur Achse (X40) der Imprägnierwalze (40) verläuft;
- dritte Einstellmittel (J3), die dazu geeignet sind, die Rakel (501) in Bezug auf eine erste Drehachse (Y1) parallel zur zweiten Richtung (D2) zu drehen, so dass die Längsachse (H) der Rakel in Bezug auf die Ebene tangential zur Oberfläche der Imprägnierwalze (40) geneigt wird, so dass die Längsachse (H) der Rakel parallel zur Ebene tangential zum Abschnitt (P4) oder leicht geneigt in Bezug auf die Ebene tangential zum Abschnitt (P4) angeordnet ist;
- vierte Einstellmittel (J4), die dazu geeignet sind, die Rakel in Bezug auf eine zweite Drehachse (Y2), die sowohl zur ersten Richtung (D1) als auch zur zweiten Richtung (D2) senkrecht verläuft, so zu drehen, dass die Längskante (502) der Rakel geneigt oder in perfekt paralleler Stellung in Bezug auf den Abschnitt (P4) der Oberfläche der Imprägnierwalze (40) angeordnet ist.

7. Imprägnierungssystem (1) nach einem der vorstehenden Ansprüche, wobei das Harzrückgewinnungssystem (9) eine Schale (95) umfasst, die unterhalb eines jeden Abstreifers (90) angeordnet ist, um das vom Abstreifer (90) abgestreifte überschüssige Harz aufzunehmen.

8. Imprägnierungssystem (1) nach einem der vorstehenden Ansprüche, wobei das Harzrückgewinnungssystem (9) umfasst:
- einen Filter (91), um das von den Abstreifern (90) zurückgewonnene Harz zu filtern, und
- eine Pumpe (92), um das zurückgewonnene Harz in eine Leitung (93) zu pumpen, die mit dem Behälter (30) der Harzzuführeinheit in Verbindung steht.

9. Imprägnierungssystem (1) nach einem der vorstehenden Ansprüche, ferner umfassend eine UV-Einheit (7), die am Ausgang der Abwickeleinheit (2) angeordnet ist, um auf das von der Abwickeleinheit abgewickelte Kabel (T) eine UV-Strahlung zu emittieren.

10. Imprägnierungssystem (1) nach einem der vorstehenden Ansprüche, wobei die Imprägniereinheit (4) ein Achsenabstandseinstellsystem (46) zum Einstellen des Achsenabstands zwischen den Imprägnierwalzen (40, 41) umfasst.

11. Imprägnierungssystem (1) nach einem der vorstehenden Ansprüche, wobei die Imprägniereinheit (4) ein Winkeleinstellsystem (44) umfasst, das dazu geeignet ist, die zweite Imprägnierwalze (41) zu bewegen, um einen Winkel des Achsenabstands (I) zwischen der zweiten Imprägnierwalze (41) und der ersten Imprägnierwalze (40) einzustellen.

12. Imprägnierungssystem (1) nach einem der vorstehenden Ansprüche, wobei die Harzzuführeinheit (3) umfasst:
- einen Behälter (30), der das Harz (R) enthält,
- ein Heizrohr (32), das mit dem Behälter (30) verbunden ist und ein Heizsystem (34) zum Erwärmen des in dem Heizrohr zirkulierenden Harzes aufweist,
- eine Dosierpumpe (31), die das Harz von dem Behälter (30) zum Heizrohr (32) pumpt, und
- eine Düse (33), die das erwärmte Harz in der Imprägniereinheit (4) ablagert.

13. Imprägnierungssystem (1) nach einem der vorstehenden Ansprüche, wobei mindestens eine der Imprägnierwalzen (40, 41) eine mittels eines Elektromotors (M3) motorisierte Walze ist.

14. Imprägnierungssystem (1) nach einem der vorstehenden Ansprüche, wobei die Imprägnierwalzen (40, 41) ein Heizsystem (43) umfassen, so dass sie erwärmt werden können.

15. Imprägnierungssystem (1) nach einem der vorstehenden Ansprüche, wobei die Ausgleichseinheit (5) umfasst:
- eine Motorwalze (50), auf die das aus der Imprägniereinheit (4) auslaufende imprägnierte Kabel (M) aufgewickelt wird, um verdichtet zu werden und ein vorimprägniertes Kabel (P) zu erhalten, und
- eine Tänzerwalze (51), die mit einem Sensor (52) versehen ist und auf die das von der Motorwalze (50) auslaufende vorimprägnierte Kabel (P) zurückgeführt wird.

## Revendications

1. Système d'imprégnation (1) de matériel fibreux en format d'étoupe, comprenant :
- une unité dévidoir (2) pour dérouler une étoupe (T) d'une bobine (B1),
- une unité d'alimentation de la résine (3) pour alimenter une résine (R) destinée à imprégner l'étoupe (T),
- une unité d'imprégnation (4) ayant la charge d'imprégner l'étoupe (T) avec la résine (R) de manière à obtenir une étoupe imprégnée (M) ; où ladite unité d'imprégnation (4) comprend un premier rouleau d'imprégnation (40) et un second rouleau d'imprégnation (41) disposés de manière qu'il y ait entre eux un écartement (G) égal à l'épaisseur de l'étoupe pré-imprégnée que l'on veut obtenir ;
- une unité d'équilibrage (5) apte à compacter l'étoupe imprégnée (M) pour obtenir une étoupe pré-imprégnée (P), et
- une unité de bobinage (6) qui enroule ladite étoupe pré-imprégnée (P) de manière à obtenir une bobine (B) d'étoupe pré-imprégnée ;
**caractérisé en ce que** :
ledit système d'imprégnation (1) comprend un système de récupération de la résine (9) pour récupérer la résine en excès de l'unité d'imprégnation (4) et l'envoyer à l'unité d'alimentation de la résine (3) ; où ledit système de récupération de la résine (9) comprend des racloirs (90) qui raclent les rouleaux d'imprégnation (40, 41) pour récupérer la résine en excès ; et
ladite unité d'imprégnation (4) comprend un système d'étalement (500) apte à étaler la résine sur les rouleaux d'imprégnation (40, 41).

2. Système d'imprégnation (1) selon la revendication 1, où le système d'étalement (500) comprend une racle (501) ayant un axe longitudinal (H) et un bord opérationnel (502), perpendiculaire au susdit axe longitudinal (H) de la racle (501), apte à raser une surface externe d'un des deux rouleaux d'imprégnation (40) pour étaler et distribuer la résine sur la surface externe du rouleau d'imprégnation (40) pendant la rotation du rouleau d'imprégnation.

3. Système d'imprégnation (1) selon la revendication 1 ou 2, où ledit bord opérationnel (502) est apte à raser la surface externe du rouleau d'imprégnation (40) sur un segment (P4) de la surface externe du rouleau d'imprégnation ; où l'axe longitudinal (H) de la racle est parallèle ou légèrement incliné par rapport à un plan tangent au segment (P4) où le bord opérationnel (502) de la racle (501) rase le rouleau d'imprégnation (40).

4. Système d'imprégnation (1) selon l'une quelconque des revendications précédentes, où le système d'étalement (500) comprend une unité de réglage (600) apte à soutenir la racle (501) et régler une position de la racle (501) par rapport au rouleau d'imprégnation (40) aux fins d'établir l'orientation du bord opérationnel (502) de la racle par rapport à la surface externe du rouleau d'imprégnation (40).

5. Système d'imprégnation (1) selon la revendication 4, où ladite unité de réglage (600) est conformée de manière à consentir à la racle (501) de se déplacer et de pivoter.

6. Système d'imprégnation (1) selon la revendication 5, où ladite unité de réglage (600) comprend :
- des premiers moyens de réglage (J1) aptes à déplacer la racle (501) le long d'une première direction (D1) pratiquement radiale au rouleau d'imprégnation (40) de façon à régler la distance du bord opérationnel (502) de la racle (501) par rapport à la surface externe du rouleau d'imprégnation (40) ;
- des deuxièmes moyens de réglage (J2) aptes à régler une position de la racle le long d'une seconde direction (D2) parallèle à l'axe (X40) du rouleau d'imprégnation (40) ;
- des troisièmes moyens de réglage (J3) aptes à faire exécuter à la racle (501) une rotation par rapport à un premier axe (Y1) parallèle à la seconde direction (D2) de manière à incliner l'axe longitudinal (H) de la racle par rapport au plan tangent à la surface du rouleau d'imprégnation (40), en disposant cet axe longitudinal (H) de la racle en position parallèle au plan tangent au segment (P4) ou en position légèrement inclinée par rapport au susdit plan tangent au segment (P4) ;
- des quatrièmes moyens de réglage (J4) aptes à faire exécuter à la racle une rotation par rapport à un second axe de rotation (Y2) perpendiculaire tant à la première direction (D1) qu'à la seconde direction (D2), rotation telle à pouvoir incliner ou rendre parfaitement parallèle le bord longitudinal (502) de la racle par rapport au segment (P4) de la surface du rouleau d'imprégnation (40).

7. Système d'imprégnation (1) selon l'une quelconque des revendications précédentes, où ledit système de récupération de la résine (9) comprend une coupelle (95) disposée sous chaque racloir (90) pour recevoir la résine en surplus raclée par le racloir (90).

8. Système d'imprégnation (1) selon l'une quelconque des revendications précédentes, où ledit système de récupération de la résine (9) comprend :
- un filtre (91) pour filtrer la résine récupérée par les racloirs (90), et
- une pompe (92) pour pomper la résine récupérée dans un conduit (93) en communication avec le réservoir (30) de l'unité d'alimentation de la résine.

9. Système d'imprégnation (1) selon l'une quelconque des revendications précédentes, comprenant également une unité UV (7) disposée à la sortie de ladite unité dévidoir (2) pour émettre une radiation UV sur l'étoupe (T) déroulée depuis l'unité dévidoir.

10. Système d'imprégnation (1) selon l'une quelconque des revendications précédentes, où l'unité d'imprégnation (4) comprend un système de réglage entraxe (46) pour régler l'entraxe entre les rouleaux d'imprégnation (40, 41).

11. Système d'imprégnation (1) selon l'une quelconque des revendications précédentes, où l'unité d'imprégnation (4) comprend un système de réglage de l'angulation (44) apte à déplacer le second rouleau d'imprégnation (41) pour régler une angulation de l'entraxe (I) entre le second rouleau d'imprégnation (41) et le premier rouleau d'imprégnation (40).

12. Système d'imprégnation (1) selon l'une quelconque des revendications précédentes, où ladite unité d'alimentation de la résine (3) comprend :
- un réservoir (30) contenant de la résine (R),
- un tuyau réchauffeur (32) connecté au réservoir (30) et ayant un système de chauffage (34) pour réchauffer la résine qui transite dans le tuyau réchauffeur,
- une pompe doseuse (31) qui pompe la résine du réservoir (30) vers le tuyau réchauffeur (32), et
- une buse (33) qui dépose la résine réchauffée dans ladite unité d'imprégnation (4).

13. Système d'imprégnation (1) selon l'une quelconque des revendications précédentes, où au moins l'un des rouleaux d'imprégnation (40, 41) est un rouleau motorisé moyennant un moteur électrique (M3).

14. Système d'imprégnation (1) selon l'une quelconque des revendications précédentes, où les rouleaux d'imprégnation (40, 41) sont dotés d'un système de réchauffage (43) pour les réchauffer.

15. Système d'imprégnation (1) selon l'une quelconque des revendications précédentes, où l'unité d'équilibrage (5) comprend :
- un rouleau moteur (50) sur lequel est enroulée l'étoupe imprégnée (M) en sortie de l'unité d'imprégnation (4) de manière à la compacter et obtenir une étoupe pré-imprégnée (P), et
- un rouleau fou (51) muni de capteur (52) sur lequel est renvoyée l'étoupe pré-imprégnée (P) qui sort du rouleau moteur (50).
